# EUROPEAN PATENT APPLICATION

(11) **EP 4 624 371 A1**
(43) Date of publication of application: **01.10.2025**
(21) Application number: 24167671.7
(22) Date of filing: 28.03.2024
(51) Int. Cl.: B65G 1/04

(54) **A ROBOTIC VEHICLE**

(71) Applicant: AUTOSTORE TECHNOLOGY AS, 5578 Nedre Vats (NO)
(72) Inventor: ENGELSGJERD, Svein, 5578 Nedre Vats (NO)
(74) Representative: Kilburn & Strode LLP

(57) **Abstract**

A robotic vehicle (502) for use in an automated storage and retrieval system. The robotic vehicle comprises a body, a gripping device (508) and an electrical energy storage device (550). The gripping device (508) is arranged to be lowered from and raised to the body and to engage and disengage a container (112). The electrical energy storage device is arranged to at least partly power the robotic vehicle (502). At least one of the electrical energy storage device and the gripping device is further arranged to releasably engage the other device. The gripping device (508) is arranged to raise the electrical energy storage device (550), when engaged therewith, into electrical communication with the body to at least partly power the vehicle (502).

## Description

### TECHNICAL FIELD

The disclosure relates to a robotic vehicle and a method of operating a robotic vehicle. More particularly, it relates to a robotic vehicle for use in an automated storage and retrieval system and to a method of operating a robotic vehicle in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles have rechargeable batteries on board to provide power to the vehicles for their operation. Before the battery becomes fully discharged by operation of the vehicle, the vehicle moves to a charging station to recharge the battery. When the battery is fully recharged, the vehicle leaves the charging station and continues with its normal operation of handling containers. While the vehicle is recharging in this way, it is not available to handle containers. Thus, either additional robotic container-handling vehicles must be deployed during that time to handle the containers that would have been handled by the re-charging vehicle or fewer container-handling operations can be carried out. Either effect is a drawback.

One or more aspects of the invention are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of an existing storage system comprising a grid and a plurality of robotic container-handling vehicles configured to retrieve and/or rearrange goods stored within the grid;
Fig. 2 shows a top view of the system of Fig. 1;
Fig. 3A shows a side view of an existing first robotic container-handling vehicle suitable for use in the system of Fig. 1;
Fig. 3B shows a side view of an existing second robotic container-handling vehicle suitable for use in the system of Fig. 1;
Fig. 3C is a perspective side view of the robot of Fig. 3B;
Fig. 4 shows an existing computing device for implementing the operations described herein;
Fig. 5 shows a perspective, schematic view of a robotic container-handling vehicle, based on the first vehicle shown in Fig. 3A and modified to embody this invention;
Fig. 6 shows a perspective, schematic view of a battery of the modified vehicle of Fig. 5;
Fig. 7 shows a schematic, plan view of part of the battery of Fig. 5; and
Fig. 8 shows a perspective, schematic view of the modified vehicle of Fig. 5, including the battery of Fig. 6 positioned in a gripping device of the vehicle;

### DETAILED DESCRIPTION

In overview, this disclosure relates to an automated storage system in which a robotic container-handling vehicle uses a gripping device to pick up, move and put down containers in a container-handling operation. In a modification described herein, rather than the robotic vehicle taking time out from this operation to visit a charging station and re-charge an on-board battery, the robot vehicle is modified to use the gripping device to pick up a swapable battery from a stack of such batteries and fit that to a body of the robot in order to power the robot. When the battery is discharged, the robot removes the battery from the body, using the gripping device, and deposits the battery on a stack of like batteries for recharging. The robot, using an on-board store of electrical energy, can then move to another stack of charged batteries, pick up the top battery from the stack, again using the gripping device, fit that to the body of the robot and then carry on with its normal container-handling operations. In this way, downtime away from container-handling operations due to the need to recharge an on-board battery by visiting a charging station, is removed. Thus, fewer robotic vehicles are needed and/or more container handling operations can be completed. It will be understood this reduces the cost of and/or increases the productivity of the system.

### Automated storage and retrieval system overview

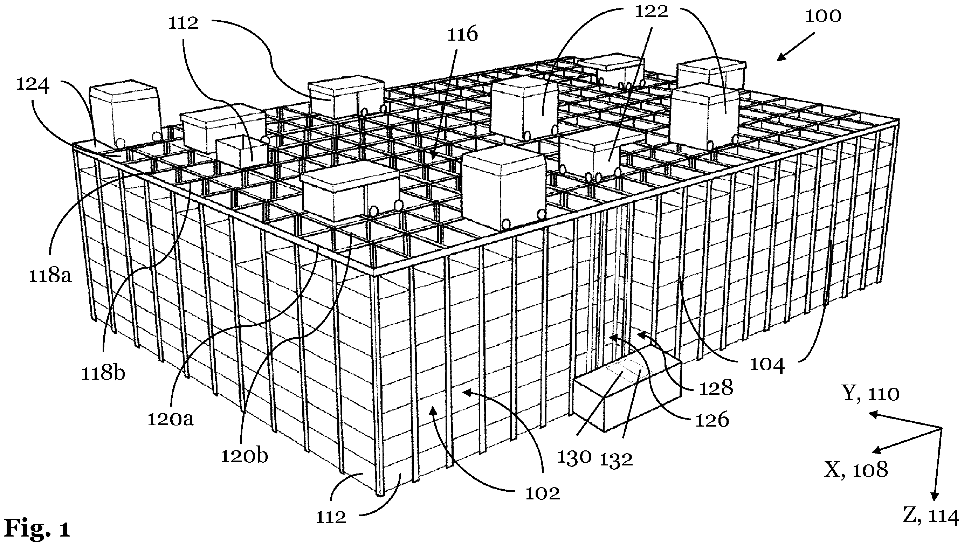

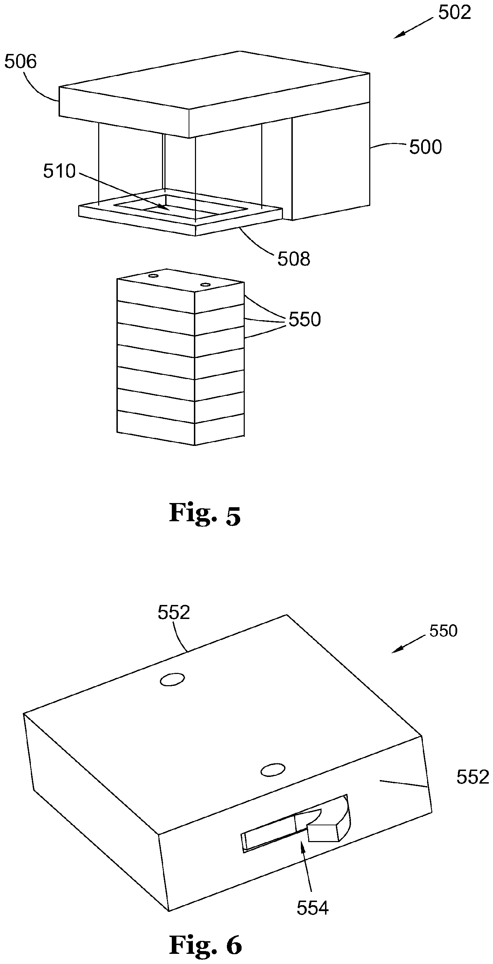

Fig. 1 shows an existing storage system. This will first be explained so that embodiments of the invention, which are modifications to the system of Fig. 1, but which use many of the elements of the system of Fig. 1, can be understood. The description of those embodiments starts with the description with reference to Fig. 5. Before that, and with reference to Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

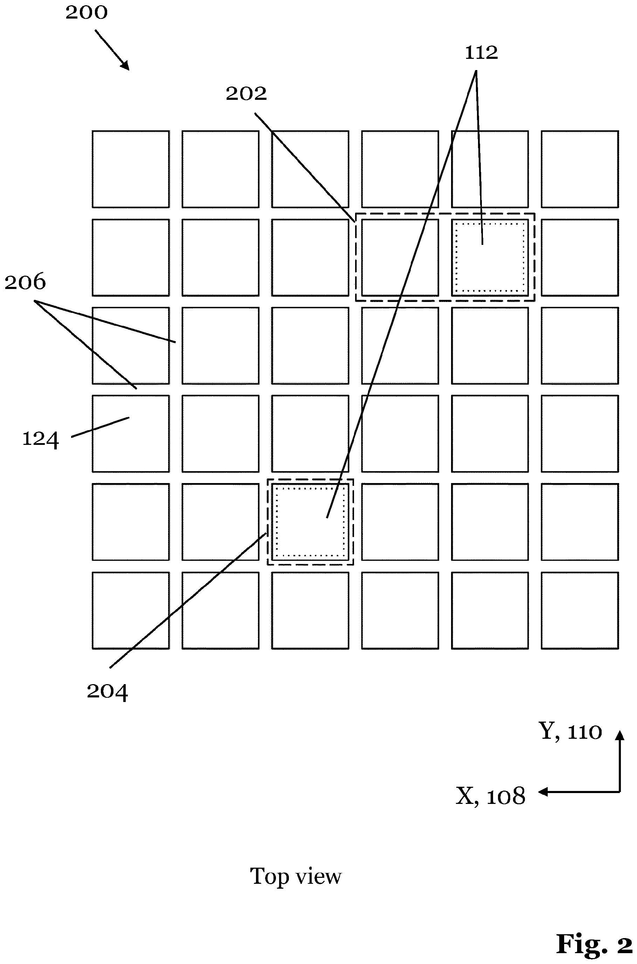

Referring to the arrangement shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

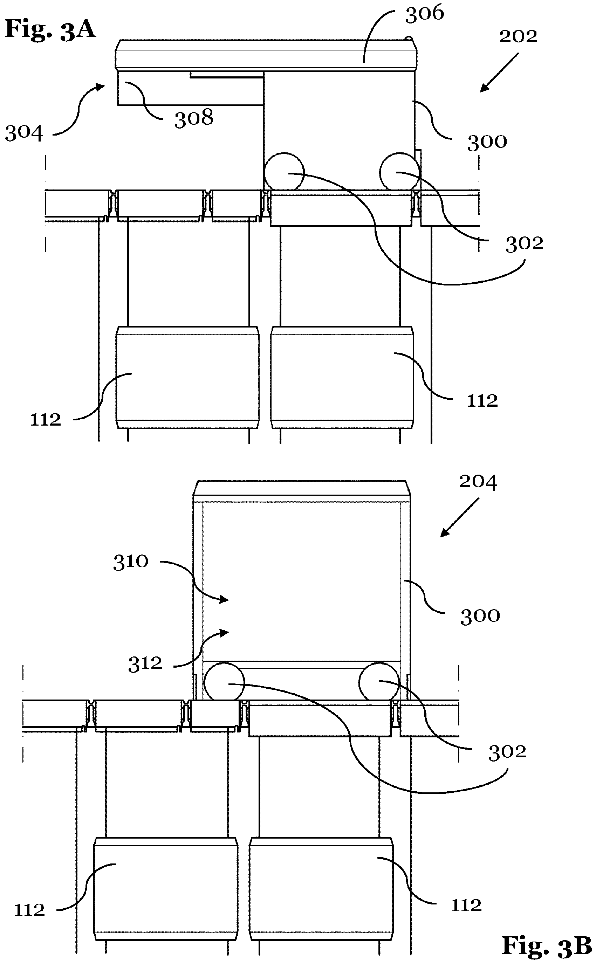

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

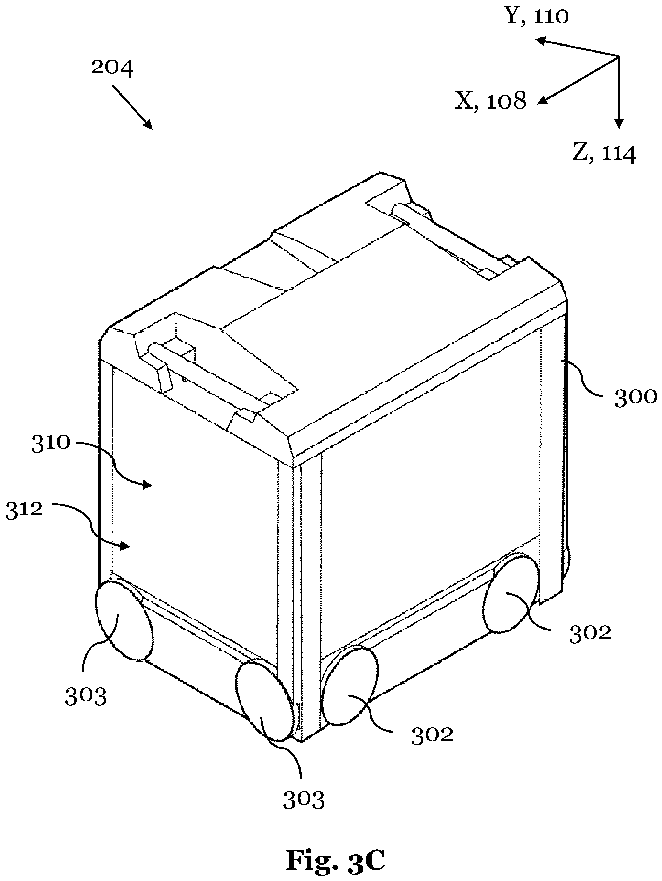

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

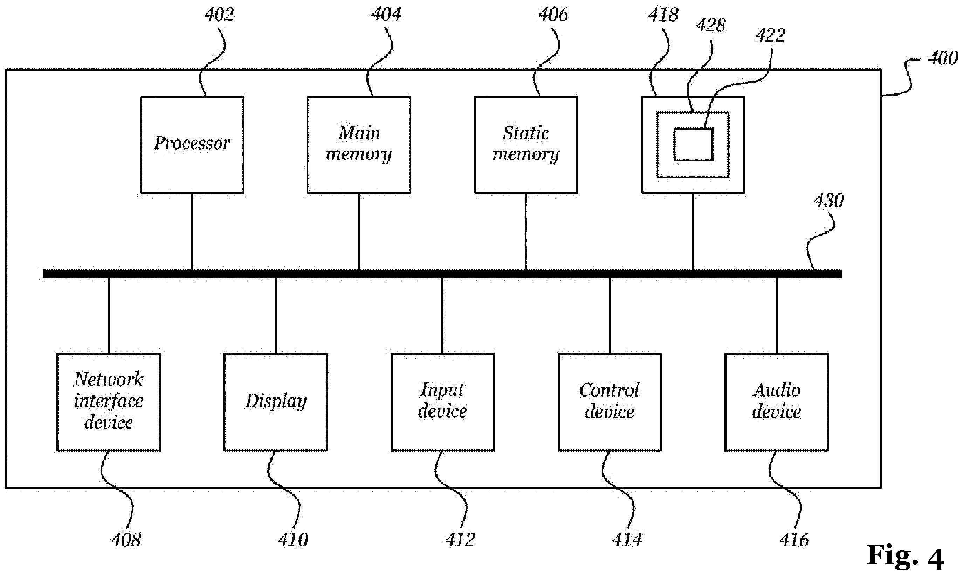

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

A system will now be described that is the same as the system described above with reference to Fig. 1 to Fig. 4 and as show in those figures, but which has been modified and improved in some areas. The modifications and improvements will be described with reference to Fig. 5 to Fig. 8, it being understood that other elements of the system of Fig. 1 to Fig. 4 are carried over and unchanged, unless where needed to accommodate the modifications.

Fig. 5 shows a modified robot 502 of the cantilever-type robots 202 described above with reference to Fig. 3A. The modified robot 502, which will now be referred to as 'the robot 502', is substantially the same as the previously-described robot 202 except in the areas that will now be described.

With continued reference to Fig. 5, the gripping device 508 of the robot 502 is modified to have an aperture 510 therethrough. In other ways the gripping device is the same in being operable by the robot 502 to be selectively lowered from and raised to the body 500 of the robot 502. This raising and lowering is done by the provision of an elongate flexible member secured at each corner of the gripping device 508 that can be let out from or drawn into the cantilever element 506 of the robot 502.

The aperture 510 is sized to receive an electrical energy storage device in the form of a battery 550. A stack of the batteries 550 is shown in Fig. 5. Each battery 550 is substantially the same size and shape, and the same in other necessary ways, as each other so that they are operationally interchangeable. Furthermore the batteries are shaped so that they can be stacked, one on top of the other, for example by projecting structure (not shown) on one of the top and bottom that mates with complementary receiving structure (not shown) on the other of the top and bottom.

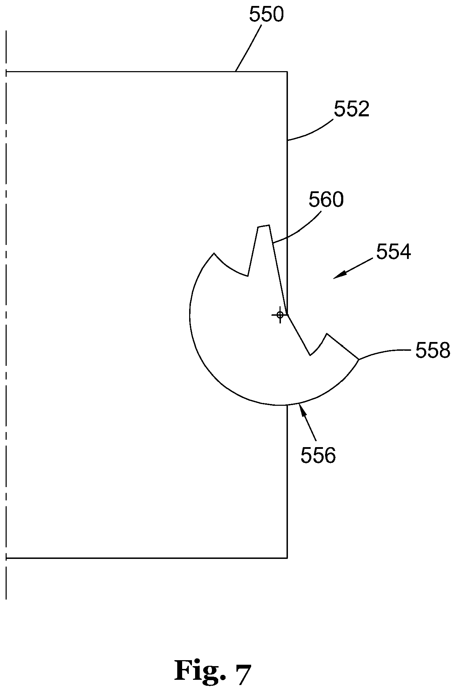

Fig. 6 shows a representative one 550 of the batteries 550. The battery is substantially a cuboid in shape. At each of two opposite faces 552 of the battery 550, the battery 550 has a respective engagement device 554. (The faces 552 are those that will be face-to-face with cavity-defining walls of the gripping device 508 when the battery is accommodated therein.) As can be seen in Fig. 7, each engagement device 554 includes engagement structure in the form of a rotatable disc portion 556 (only one of which is shown in Fig. 7). Each disc portion 556 is rotatably housed in the battery 500 near the respective face 552, so that some of the disc portion 556 projects from the battery 500 and some is housed therein. Viewed axially, each disc portion 556 has a semi-circular part with circumferentially projecting finger 558 and a substantially radially projecting finger 560 projective therefrom. The two fingers 558, 560 are spaced apart by an obtuse angle. Each disc portion 556 in housed in the battery 550 such that the axis of rotation is substantially in the direction in which the battery 550 is lifted towards and lowered from the robot 502 during operation.

Operation of the modified robot 502 of the modified systems will now be described. With reference to Fig. 5 a robot 502 that needs a battery 550, for example to replace a discharged battery 550 that it has deposited elsewhere, moves to a vertical column access opening in which is stored a stack of charged batteries 550. It is envisaged that, when stacked, the batteries 550 in the stack are in electrical contact with each other such that they are connected in parallel across a charging supply of electrical energy from a charging station (not shown).

When the robot 502 is positioned such that the gripping device 508 is above the stack of batteries 550, the robot 502 is operated to lower the gripping device 508 such that the top battery 550 in the stack is accommodated in the aperture 510 in the gripping device 508.

Each rotatable disc portion 556 in the battery 550 is then rotated such that the circumferentially projecting finger 558 in each disc portion engages with a respective recess (not shown) formed in the gripping device 508. Each recess is formed in a respective one of the walls of the gripping device 508 that is opposite and face-to-face with each of the two walls 552 of the battery 550. This engagement of the fingers 558 in the recesses has the effect of fixing the battery 550 to the gripping device 508.

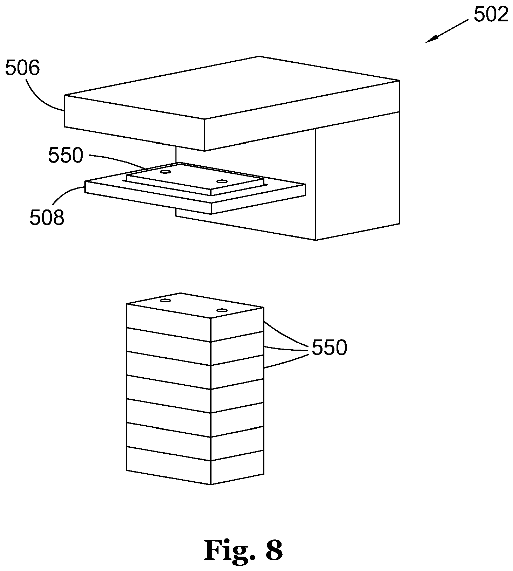

As shown in Fig. 8, the robot 502 is then operated to raise the gripping device, with the battery held therein, towards the cantilever element 506 of the robot 502. This raising continues until the battery 550 is adjacent the underside of the cantilever element 506 (not shown in Fig. 8). When this happens, each rotatable disc portion 556 in the battery 550 is rotated such that the circumferentially projecting finger 558 in each disc portion partly withdraws from the respective recess, but does not disengage from it. As this is happening, the radially projecting finger 560 in each disc portion 556 moves into engagement with a downwardly projecting tab (not shown) fixed to the underside of the cantilever element 506 and in which is an aperture into which the radially projecting finger 560 is moved to fix the battery 550 to the robot 502. Each disc portion 556 is further rotated in the same direction so that the radially projecting fingers 560 further engage the respective tab and so that the circumferentially projecting fingers fully withdraw from the respective recesses in the gripping device 508. Thus, the battery 550 is now fixed to the robot 502 and not to the gripping device 508. In this position, electrical contacts of the battery 550 are in electrical contact with cooperating contacts of the robot 502 to provide electrical power to the robot 502 for its operation.

The gripping device 508 can then be lowered, leaving the battery 550 in position in the robot 502. The robot can then be used in its normal operation as part of the system to select, grip, raise, move, lower and deposit bins as previously described.

Although not shown in the drawings, it is also envisaged that these modifications be applied to the internal cavity type of robot 204 described above with reference to Fig. 3B. It will be understood that the gripping device of lifting device 312 of that robot 204 would be modified in substantially the same way as the modified gripping device 508 of the robot 502 described above. It will also be understood that the body 300 of the robot 204 would be similarly modified to include charging contacts for connecting with those of the batteries 550 and to include a similar downwardly projecting tab fixed to the underside of the robot 204 and projecting down into the cavity 310 thereof for engagement with the radially projecting finger 560 of the battery.

It is also envisaged that both the robot 502 and the modified version of the robot 204 would be provided with on-board electrical energy storage means, such as capacitors or a battery (not shown), for use in powering the robot 502, 204 when the robot 502, 204 is disconnected from the swapable battery 550 during swapping.

### Additional disclosure

In one aspect of this invention, there is provided a robotic vehicle for use in an automated storage and retrieval system, the robotic vehicle comprising a body, a gripping device and an electrical energy storage device, wherein:
the gripping device is arranged to be lowered from and raised to the body and to engage and disengage a container;
the electrical energy storage device is arranged to at least partly power the robotic vehicle;
wherein the gripping device is further arranged to engage or be engaged by the electrical energy storage device and to raise the electrical energy storage device into electrical communication with robotic vehicle to at least partly power the vehicle.

In this way, the robotic vehicle is able to use the gripping device to pick up an electrical energy storage device, such as a battery, and use it to power the vehicle.

The gripping device may also be arranged to disengage or be disengaged by the electrical energy storage means. It may be the electrical energy storage means that is arranged to engage and disengage the gripping device.

The body may be arranged to engage or be engaged by the electrical energy storage means to hold the electrical energy storage means in electrical communication therewith to at least partly power the vehicle. In this way, the gripping device is able to pick up, for example, a battery and transfer it to the body of the robotic vehicle to power the vehicle so that the gripping device can then carry on with, for example, lifting a container.

The gripping device may be further arranged to lower the electrical energy storage device out of electrical communication with the robotic vehicle so that the vehicle is no longer at least partly powered thereby.

The gripping device may comprise a cavity in which it receives the electrical energy storage device. The gripping device may comprise an aperture therethrough in which the electrical energy storage device is accommodated.

The electrical energy storage device may comprise an engagement device that is operable to engage and disengage the gripping device and/or the body. The engagement device may comprise engagement structure that is arranged and moveable between positions in which neither the gripping device nor the body are engaged, the gripping device only is engaged, the gripping device and the body are engaged and the body only is engaged. The engagement structure may be arranged to move between the position in which the gripping device only is engaged and the position in which both the gripping device and the body are engaged without disengaging the gripping device. The engagement structure may be arranged to move between the position in which the body only is engaged and the position in which both the gripping device and the body are engaged without disengaging the body.

The engagement device may comprise engagement structure rotatably mounted in the electrical energy storage device. The engagement structure may comprise circumferentially spaced projections, at least one of which is arranged to rotate into and out of engagement with a corresponding aperture of the gripping device and at least one of which is arranged to rotate into and out of engagement with a corresponding aperture of the body. The aperture of the gripping device may be a recess in the gripping device. The recess in the gripping device may be in structure of the gripping device that defines the cavity or aperture therethrough. The aperture of the body may be a recess in or hole through structure of the body that projects from the body between the electrical energy storage device and the gripping device when the electrical energy storage device is lifted into electrical communication with the body. The projections of the engagement structure may be arranged such that, when the electrical energy storage device is lifted into electrical communication with the body, rotating the rotatable engagement structure of the engagement device out of engagement with the gripping device, first rotates structure of the engagement device into engagement with the body. The projections may be arranged such that, when the electrical energy storage device is lifted into electrical communication with the body, rotating the rotatable structure of the engagement device out of engagement with the body, first rotates structure of the engagement device into engagement with the gripping device. The projections may be spaced apart on the rotatable engagement structure in a circumferential direction such that as the at least one projection that engages the gripping device is rotated away from engagement with gripping device, the at least one projection that engages with the body is rotated towards engagement with the gripping device. The projections may be spaced apart on the rotatable engagement structure in a circumferential direction such that as the at least one projection that engages the gripping device is rotated towards engagement with gripping device, the at least one projection that engages with the body is rotated away from engagement with the gripping device.

The electrical energy storage device may be rechargeable. The electrical energy storage device may comprise a battery. The electrical energy storage device may comprise a capacitor.

The electrical energy storage device and the body may each comprise electrical contacts arranged to make electrical contract when the electrical energy storage means is raised into electrical communication with the body, thereby at least partly powering the robotic vehicle.

The electrical energy storage device may be arranged for stacking on another substantially identical energy storage device. In other words, the electrical energy storage device is shaped and configured to stack on top of another electrical energy storage device of substantially the same shape and configuration. The electrical energy storage device may comprise electrical contacts on opposite sides therefore arranged such that when the device is stacked on another substantially identical energy storage device the contacts on one side of the electrical energy storage device are in electrical contact with contacts on the other side of the other substantially identical electrical energy storage device. In this way, the electrical energy storage device may be charged by the other electrical storage device and/or by a supply of electrical energy to which that other device is connected.

The robotic vehicle may comprise a lifting device, the gripping device being mounted to the lifting device and lowerable therefrom and raisable thereto. may comprise a gripping device. The gripping device may be arranged to engage and disengage the container by releasably gripping the container.

The robotic vehicle may comprise a storage space arranged to receive the container when engaged by the gripping device and the gripping device is raised to the body.

In a second aspect of this invention, there is provided a method of operating a robotic vehicle in an automated storage and retrieval system, the robotic vehicle comprising a body, an electrical energy storage device and a gripping device arranged to be lowered from and raised to the body and to engage and disengage a container, the method comprising the steps of:
an engagement step in which the gripping device engages or is engaged by the electrical energy storage device; and
a lifting step in which the gripping device raises the electrical energy storage device into electrical communication with the robotic vehicle to at least partly power the vehicle.

In this way, the method results in the robotic vehicle picking up an electrical energy storage device, for example a battery, to power the vehicle.

The method may also comprise a lowering step before the engagement step in which the gripping device is lowered from the body towards the electrical energy storage device to receive the storage device in an aperture in the gripping device.

The method may also comprise a holding step in which the body is engaged by or engages the electrical energy storage means to hold the electrical energy storage means in electrical communication with the body to at least partly power the vehicle. The holding step may be after the lifting step. The holding step may further comprise the gripping device disengaging or being disengaged by the electrical energy storage device, which may happen after the engagement between the electrical energy storage device and the body.

The method may also comprise steps of normal operation, after the holding step in which the electrical energy storage means is held in electrical communication with the body and the lifting means is lowered and raised to engage, raise, move, lower and disengage storage containers of the system.

The method may comprise the steps of reversing the holding step, the lifting step and the engagement step to put down the electrical energy storage device. Specifically, the method may comprise an un-holding step in which the body is disengaged by or disengages the electrical energy storage device. The un-holding step may further comprise the gripping device engaging or being engaged by the electrical energy storage device, which may happen before the disengagement between the electrical energy storage device and the body. The method may comprise a lowering step in which the lifting means, with the electrical energy storage with engaged therewith, is lowered from the body. This may follow the un-holding step. The method may comprise a dis-engagement step in which the gripping device disengages or is disengaged by the electrical energy storage device.

The engagement step may comprise the gripping device of the robot vehicle engaging or being engaged by the top one of a stack of a plurality of electrical energy storage devices. The dis-engagement step may comprise depositing the electrical energy storage device on top of another electrical energy storage device to form a stack thereof.

The robotic vehicle of the second aspect may be the robotic vehicle of the first aspect and so it is envisaged that the features and optional features of the first aspect may also be features and optional features of the second aspect.

The method may comprise operating the engagement device of the first aspect to selectively engage and disengage the lifting means and/or the body.

In a third aspect of this invention, there is provided a computer program product comprising code portions which when executed by a computer processing device of an automated storage and retrieval system, causes a robotic vehicle of that that system to carry out the method of the second aspect. The robotic vehicle may be the robotic vehicle of the first aspect.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for use in an automated storage and retrieval system, the robotic vehicle comprising a body, a gripping device and an electrical energy storage device, wherein:
the gripping device is arranged to be lowered from and raised to the body and to engage and disengage a container;
the electrical energy storage device is arranged to at least partly power the robotic vehicle;
wherein at least one of the electrical energy storage device and the gripping device is further arranged to releasably engage the other device; and
the gripping device is arranged to raise the electrical energy storage device, when engaged therewith, into electrical communication with the body to at least partly power the vehicle.

2. A robotic vehicle according to claim 1 or claim 2, wherein the electrical energy storage device and the body are arranged to releasably engage each other to hold the electrical energy storage means in electrical communication with the body to at least partly power the vehicle when the two are engaged.

3. A robotic vehicle according to claim 1 or claim 2, wherein the gripping device is further arranged to lower the electrical energy storage device out of electrical communication with the body when the electrical energy storage device and the body are disengaged so that the vehicle is no longer at least partly powered thereby.

4. A robotic vehicle according to any preceding claim, wherein the gripping device comprises an aperture therethrough in which the electrical energy storage device is accommodated.

5. A robotic vehicle according to any preceding claim, wherein the electrical energy storage device comprises an engagement device that is operable to engage and disengage the gripping device and/or the body; and optionally the engagement device comprises engagement structure that is arranged and moveable between a position in which neither the gripping device nor the body are engaged, a position in which the gripping device only is engaged, a position in which the gripping device and the body are engaged, and a position in which the body only is engaged; and optionally wherein the engagement structure is arranged to move between the position in which the gripping device only is engaged and the position in which both the gripping device and the body are engaged without disengaging the gripping device, and/or the engagement structure is arranged to move between the position in which the body only is engaged and the position in which both the gripping device and the body are engaged without disengaging the body.

6. A robotic vehicle according to any preceding claim, wherein the electrical energy storage device is arranged for stacking on another substantially identical energy storage device; and, optionally, the electrical energy storage device comprises electrical contacts on opposite sides thereof arranged such that when the device is stacked on another substantially identical energy storage device the contacts on one side of the electrical energy storage device are in electrical contact with contacts on the other side of the other substantially identical electrical energy storage device.

7. A method of operating a robotic vehicle in an automated storage and retrieval system, the robotic vehicle comprising a body, an electrical energy storage device and a gripping device arranged to be lowered from and raised to the body and to engage and disengage a container, the method comprising the steps of:
an engagement step in which at least one of the gripping device and the electrical energy storage device engages the other device; and
a lifting step in which, with the griping device and the electrical energy storage device engaged, the gripping device raises the electrical energy storage device into electrical communication with the robotic vehicle to at least partly power the vehicle.

8. A method according to claim 7, wherein the method also comprises a lowering step before the engagement step in which the gripping device is lowered from the body towards the electrical energy storage device to receive the storage device in an aperture in the gripping device.

9. A method according to claim 7 or claim 8, wherein the method also comprises a holding step in which at least one of the body and the electrical energy storage device engages the other to hold the electrical energy storage means in electrical communication with the body to at least partly power the vehicle; and optionally wherein the holding step further comprises the gripping device and the electrical energy storage device disengaging from each other, optionally after the engagement between the electrical energy storage device and the body.

10. A method according to claim 9, wherein the method also comprises steps of normal operation, after the holding step, in which the electrical energy storage means is held in electrical communication with the body and the lifting means is free to be lowered and raised to engage, raise, move, lower and disengage storage containers of the system.

11. A method according to claim 9 or claim 10, wherein the method comprises the steps of reversing the holding step, the lifting step and the engagement step to put down the electrical energy storage device; and optionally, the method comprises an un-holding step in which the body is disengaged by or disengages the electrical energy storage device; and optionally the un-holding step further comprises the gripping device engaging or being engaged by the electrical energy storage device, which optionally happens before the disengagement between the electrical energy storage device and the body.

12. A method according to any of claim 7 to claim 11, wherein the method comprises a lowering step in which the lifting means, with the electrical energy storage with engaged therewith, is lowered from the body, which optionally follows the un-holding step; and optionally the method comprises a dis-engagement step in which the gripping device disengages or is disengaged by the electrical energy storage device.

13. A method according to any of claim 7 to claim 12, wherein the engagement step comprises the gripping device of the robot vehicle engaging or being engaged by the top one of a stack of a plurality of electrical energy storage devices; and optionally, when this claim is dependent on claim 12, the dis-engagement step comprises depositing the electrical energy storage device on top of another electrical energy storage device to form a stack thereof.

14. A method according to any of claim 7 to claim 13, wherein the method comprises operating the engagement device of the first aspect to selectively engage and disengage the lifting means and/or the body.

15. A computer-readable medium comprising instructions which, when executed by a processor of a device, cause the device to perform the method of any of claim 7 to claim 14.
